Europäisches Patentamt

European Patent Office

Office européen des brevets

(11) Publication number: **0 403 265**
**A2**

## (12) EUROPEAN PATENT APPLICATION

(21) Application number: 90306460.8

(22) Date of filing: **13.06.90**

(51) Int. Cl.5: **B62B 3/10, B60B 33/02**

(30) Priority: **13.06.89 GB 8913536**

(43) Date of publication of application:
**19.12.90 Bulletin 90/51**

(84) Designated Contracting States:
**AT BE CH DE DK ES FR GB GR IT LI LU NL SE**

(71) Applicant: **CLARES EQUIPMENT LIMITED**
**Parkwood Estate**
**Wells Somerset BA5 1UT(GB)**

(72) Inventor: **Abbott, David Michael**
**6 Beechwood Avenue**
**Locking, Weston-Super-Mare, Avon BS24**
**8D(GB)**

(74) Representative: **Brown, Kenneth Richard et al**
**R.G.C. Jenkins & Co. 26 Caxton Street**
**London SW1H 0RJ(GB)**

(54) **A steerable mobile load carrier.**

(57) Problems exist in known forms of steerable mobile load carriers, e.g. shopping trolleys. Trolleys with four swivel castors are difficult to steer, particularly on slopes, and if two castors are fixed to improve steering, a stack of trolleys is very difficult to manoeuvre.

An arrangement is therefore used in which one pair of castors are normally inhibited from swivelling, but are released when nested. In the normal state, each of these castors is prevented from swivelling in a respective one of two opposite directions but allowed to swivel in the other direction. This arrangement ensures good reverse manoeuvrability while providing both improved control over forward movement and the desired manoeuvrability of a trolley stack.

FIG.1.

# A STEERABLE MOBILE LOAD CARRIER

This invention relates to a steerable mobile load carrier, such as a shopping trolley, having a set of ground-contacting wheel elements. The invention is particularly concerned with the arrangement for enabling the carrier to be steered during travel.

A conventional form of shopping trolley comprises a base chassis supporting an upwardly open wire mesh shopping basket, an elongate transverse handle being fixed to the rear portion of the basket to permit the shopper to push the trolley from the rear. Mobility is provided by a set of castors fixed to the chassis, and this set normally comprises two rear castors and two front castors. Although it is common that all four castors are freely rotatable about vertical axes to provide maneuverability, such an arrangement presents problems in certain circumstances. In particular, if the trolley is travelling on a surface which slopes laterally with respect to the trolley's front-to-back axis, the castors tend to swivel to allow the trolley to travel under the effect of gravity down the slope, and it becomes very difficult for the user to push the trolley in a straight line along the slope, particularly when the trolley is heavily loaded. This presents particular problems where, for example, the shopper uses the trolley to transport the goods from inside the place of purchase (where the floor is usually level) to a vehicle in an adjacent carpark (where the ground is commonly sloping). Problems also arise in pushing the trolley up and down ramps inside and outside the shop.

To alleviate this problem, it has been proposed in the past to replace one or a pair of castors with fixed (ie. non-swivelable) wheels to inhibit unwanted sideways travel of the trolley and thus guide the trolley along a desired steered path, even when travelling on a sloping surface. Steering is provided by at least a pair of swivel castors; these steering castors may comprise either the front pair or the rear pair, but it is found that steering by way of a pair of swivelable rear castors is easier and more responsive.

This use of fixed castors presents certain problems. Firstly, it is well known to design shopping trolleys so that they can be nested together to provide economical use of storage space, and to facilitate shifting of large numbers of trolleys from one place to another eg. for return of the trolleys from trolley parking bays distributed around the carpark to the shop or supermarket. A line of nested trolleys will therefore have individual fixed castors, or pairs of fixed castors distributed along its length and will be very difficult to steer.

Secondly, it is sometimes necessary for the shopper to be able to steer the trolley during reverse travel, for example when initially removing an empty trolley from a line of nested trolleys, or when manoeuvering the trolley during shopping. If, as is preferable for forward travel steering, the rear castors are swivelable with one or both of the front castors being fixed, this steering during reverse travel is rather difficult as the fixed condition of the front castors prevents the trolley from being manoeuvered in such a way that the front of the trolley swings sideways.

The present invention aims to alleviate, at least partly, the above-noted disadvantages arising in known arrangements.

To that end, the invention provides in one aspect a steerable mobile load carrier, such as a shopping trolley, having a set of ground-contacting wheel elements of which at least one is a swivel castor, means being provided for selectively and releasably inhibiting swivel of said at least one castor from a set position, said at least one castor, when so inhibited, maintaining a desired direction of travel of the carrier.

Thus, in respective different modes of use of the carrier, the swivel castor or castors may be inhibited or released so as to swivel freely according to the steering requirements in such modes of use.

In the described embodiment, in which the carrier is a shopping trolley adapted, as is usual, to be pushed from the rear, there are provided two rear, and two front castors. One pair of castors eg the rear castors, are free to swivel at all times, and provide the steering action in normal use when the carrier travels forwards. Each one of the other pair of swivel castors, (the front castors in the example) is inhibited during forward travel from swivelling in a respective one of two opposite swivel directions. In this arrangement, there will substantially at all times during forward travel, be a front castor restrained in the set position, this being an in-line position, so as to inhibit wandering of the carrier, for example down sideways slopes, and to maintain proper steering control by the user through swivel of the rear castors.

Each front castor can be released so as to swivel freely and thus increase maneuverability, for example when the trolley is nested with another similar trolley. To achieve this, the trolley of the described embodiment includes a displaceable swivel inhibiting means arranged automatically to move from an inhibit position to a release position upon nesting of the trolley. In the nested position of the trolley, the swivel inhibiting means is retained in the release position, in which the or each front castor can freely swivel, by engagement with a portion of an adjacent trolley in the line, e.g. of the trolley immediately behind. De-nesting returns the swivel inhibiting means to its inhibit position.

The arrangement in which each of two swivel castors is inhibited from swivelling in a respective one of two opposite directions by the swivel inhibiting means in its inhibit position has the advantage of allowing both castors to swivel in its one free swivel direction to a suitable reversing position when the trolley travels backwards; the swivel inhibiting means does not restrict the swivelling in reverse travel and accordingly maneuverability in reverse is enhanced as all of the castors are then permitted to swivel.

According to the invention there is also provided a steerable mobile load carrier, such as a shopping trolley, having a set of ground-contacting wheel elements of which at least one is a swivel castor, means being provided for inhibiting swivel of said at least one castor from a set position in forward travel of the carrier, and for permitting swivel of said at least one castor from said set position in reverse travel of the carrier.

Some preferred embodiments of the invention will now be described by way of example with reference to the accompanying drawings, in which:-

Fig. 1 is a side perspective view of a mobile load carrier, in the form of a shopping trolley, in accordance with the present invention, showing in phantom the front part of a nesting trolley;

Fig. 2 is a side perspective view showing important components of a releasable castor swivel inhibiting device used in the shopping trolley of Fig. 1;

Fig. 3 is a schematic plan view illustrating the positional relationship between the front castors of the shopping trolley and a swivel inhibiting element of the device shown in Fig. 2 during forward travel of the trolley;

Fig. 4 is a schematic plan view of the front castors in a modified arrangement, and stop portions of a swivel inhibiting element in a modified releasable swivel inhibiting device;

Fig. 5 is another schematic view illustrating the positions to which the front castors swivel when the trolley travels straight backwards;

Fig. 6 illustrates the positions of the front castors when the trolley is steered during reverse travel; and

Fig. 7 is a perspective side view of a swivel castor on a shopping trolley in a modified form of the present invention.

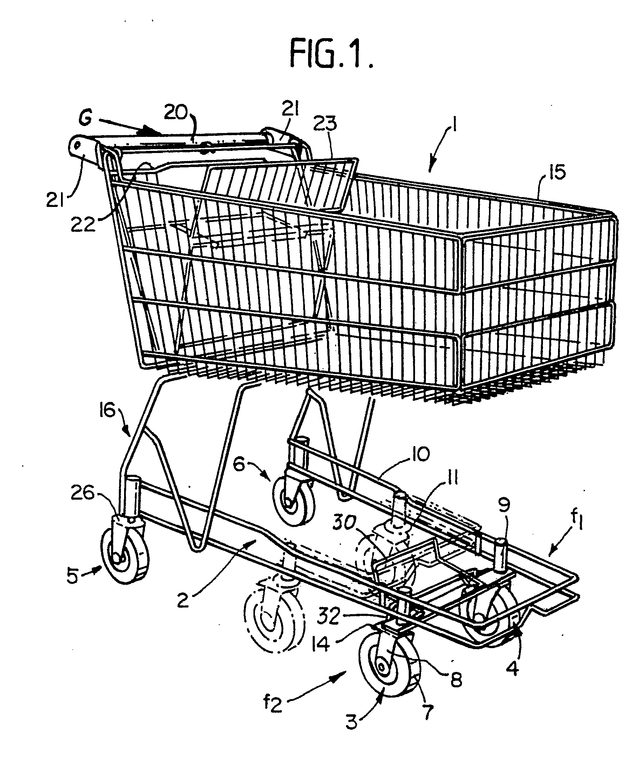

The shopping trolley 1 illustrated in Fig. 1 includes a rearwardly open, generally elongate U-shaped base chassis 2 disposed horizontally and movably supported on the ground by four castors; two of these castors, 3 and 4, are fixed at the front of the chassis, and the other two, 5 and 6 are fixed at the rear of the chassis. The castors are all of the kind having a wheel 7 rotatably mounted in a wheel support in the form of a yoke 8 provided with a swivel shaft (not shown) received in a cylindrical steel housing 9. In the illustrated shopping trolley, these housings 9 are welded at appropriate points to upper and lower U-shaped steel wire frame members 10 and 11 constituting the chassis 2. In this arrangement, therefore, each castor can swivel about a vertical axis, which is the axis of the swivel shaft, and which is horizontally displaced from the horizontal rotational axis of the wheel 7. The yoke 8 of each castor has an upper bridging portion 12 which extends over the upper part of the circumference of the wheel 7; the swivel shaft is fixed to and projects upwardly from a circular bearing housing 26 fixed on top of the forward part of the bridging portion 12, and the rearward part of the bridging portion constitutes a nose 14 projecting horizontally away from the vertical swivel axis.

An upwardly open load basket 15 of wire frame construction is welded to a steel wire or rod support structure 16 fixed to and projecting upwardly from the rear of the chassis 2. The basket 15 is generally elongate and extends along and above the elongate chassis. Fixed to and extending across the rear of the basket is an elongate bar-type handle 20 attached at its opposite ends to mounting brackets 21 fixed to the top rear corners of the basket.

As is conventional, the trolley is adapted to nest with similar trolleys, and to achieve this, both the basket and the base frame taper slightly such that they are wider at the rear of the trolley than at the front. Moreover, the rear wall 22 of the basket, which has a centre portion 23 which can hinge forwardly slightly about a lower horizontal axis relative to an outer portion to make up a child seat or shopping bag support, can hinge upwardly and forwardly about a top axis to allow the front end of the basket of a following trolley to enter through the rear of the basket and nest therein.

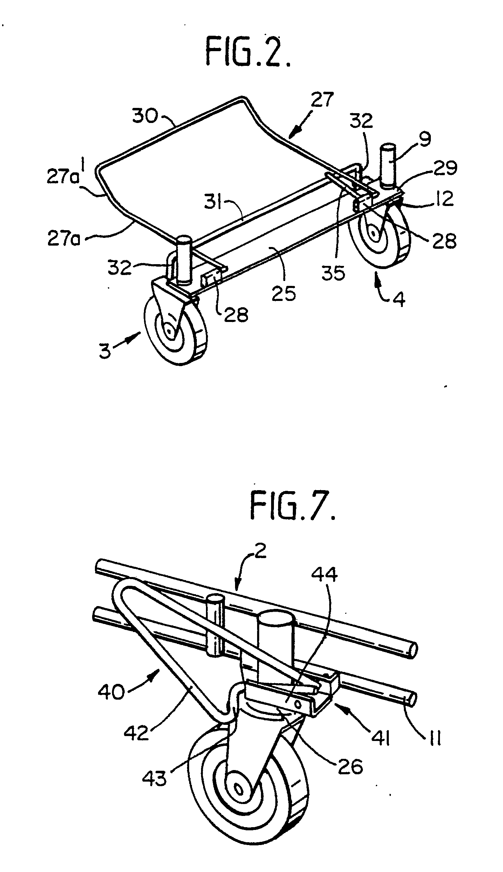

The two rear castors 5 and 6 can swivel freely, and during normal use when the trolley is being pushed forwardly, it is these rear castors which provide the steering, since the user will normally steer by manoeuvering the rear end of the trolley. The ability of the front castors 3 and 4 to swivel is controllably inhibited by a mechanism best illustrated in Fig. 2 of the drawings.

Fig. 2 shows the two front castors 3 and 4, and it must be remembered that their two vertical cylindrical swivel casings 9 are fixedly welded to the upper and lower frame members 10 and 11 of the chassis 2, though this is not shown in Fig. 2. A transverse mounting bar 25 made of rigid steel strip extends fixedly across the front of the chassis 2 between the two front castors 3 and 4. This bar 25 may be welded or otherwise mechanically fixed, or bolted to the casings 9 and/or to the swivel bearing casings 26 of the castors. A rearwardly projecting, substantially U-shaped swivel control member 27 made of bent steel rod is hingedly mounted to the crossbar 25 by means of two laterally spaced apart hinge knuckles 28 welded to the crossbar 25, which receive, as hinge pintels, laterally bent front end portions 29 of the swivel control member 27. The rear, base portion of the U-shaped member 27 comprises an upwardly bent, transversely extending actuating bar 30. A transversely extended swivel atop bar 31 is welded to two parallel longitudinal side arms 27a of the swivel control member 27 at points where it crosses the latter. This swivel stop bar 31 is disposed just behind the hinge support bar 25, and has at its lateral outer ends swivel stop members in the form of downwardly bent pins 32 for inhibiting swivelling of the castors 3 and 4, in a manner which will be fully described later herein.

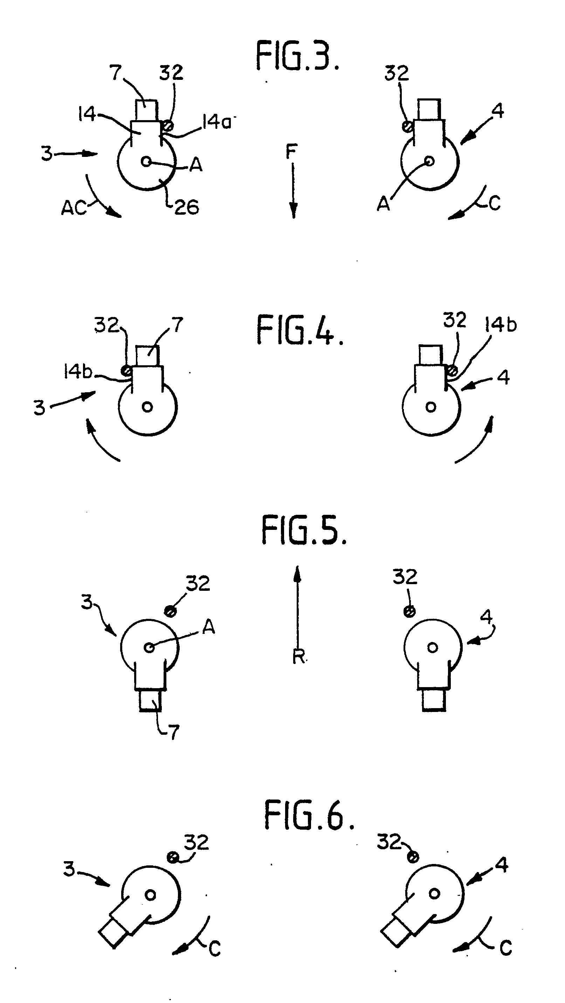

A rearwardly projecting pivot stop arm 35 welded to one of the hinge knuckles 28 limits the upward pivoting of the swivel control member 27. This latter member 27 is normally maintained by gravity in a horizontal position, with the front portions of the side arms 27a resting on the upper surface of the flat crossbar 25. In this position of the member 27, the lower ends of the swivel stop pins 32 lie adjacent to the vertical inwardly facing edges or surfaces 14a of the noses 14 of the yokes 8 of the front castors 3 and 4. This relative position of the described components is illustrated schematically in Fig. 3, from which it can clearly be seen that the lateral positions of the swivel stop pins 32 are such that each of them contacts the said inner face or edge 14a of the nose of the corresponding castor yoke when that castor is positioned for straight forward travel of the trolley in the forward direction F. The affect of this contact between the swivel stop pins 32 and the noses 14 of the castor yokes will be explained more fully below. When the trolley is nested with other similar trolleys, the front of the chassis 2 of the following trolley (illustrated in phantom in Fig. 1) will exert a camming action upon the rearwardly, upwardly inclined rear portions 27a, of the side bars 27a, so as to cause the member 27 to pivot upwardly until stopped by the pivot stop arm 35, thus lifting the swivel stop pins 32 from their position of contact with the noses of the castor yokes. As will be explained more fully below, this lifting of the pins 32 releases the front castors 3 and 4 so that they can swivel freely. When the trolley is relatively separated from the following trolley in the nest, the upward force on the swivel control member 27 is removed so that it returns, under the effect of gravity to its normal position with the swivel stop pins 32 lowered.

In Fig 3 the front castors are represented schematically in plan, and the directions in which the pins 32 permit castor swivel about the vertical axes A of the castor swivel shafts (not shown) is illustrated by arrows.

In normal use, when the trolley is being pushed forwardly by force G applied to the handle bar 20 on a perfectly horizontal surface, such as a shop floor, the trolley moves forwardly, and can be steered from the rear since the rear castors 5 and 6 are free to swivel. The swivel stop bar 31 constrains the front castors so that in any circumstances where the front castors experience a swivel torque tending to swivel them, one of them will be inhibited from swivelling by the engagement with the corresponding swivel stop pin 32. For example, if the front of the trolley experiences a sideways force $f_1$ (eg. by pushing the trolley onto a sloping surface having a lateral component of slope downwardly from right to left in the plan view of Fig. 3) both of the front castors 3 and 4 will tend to swivel in the clockwise direction C about the vertical axis A. Although the righthand castor 4 is permitted to swivel in the clockwise direction, the lefthand castor 3 cannot swivel in this way and is thus maintained by the lefthand stop pin 32 in the straight forward, or in-line swivel position, thus maintaining a forward travel path determined by the manoeuvering by the user of the rear end of the trolley, with corresponding swivelling of the rear castors 5 and 6.

Conversely, if the front of the trolley experiences a sideways force $f_2$ (eg. by pushing the trolley onto a sloping surface having a component of slope downward from left to right in the plan view of Fig. 3) both of the front castors 3 and 4 will tend to swivel about their axes A in an anticlockwise direction AC. This time, the lefthand castor 3 is free to rotate in this way, while the righthand castor 4 is restrained from anticlockwise swivel. Again, the steered path is therefore maintained, and the righthand front castor 4 is effectively locked against swivelling.

Thus, as will be understood from the above explanation, a required steering path of the trolley can be maintained by the user even on laterally sloping surfaces on which normal shopping trolleys, in which all four castors are freely rotatable, tend to roll under the effect of gravity down the slope, making steering difficult to maintain. When, however, the shopping trolley is stacked or nested, the front castors are released so that they can swivel freely to permit a long line of trolleys to be readily manoeuvered.

Although in the above-described embodiment the swivel stop pins 32 engage the inner surfaces or edges 14a of the noses 14 of the castor yokes, the stop bar 31 could be lengthened so that the pins 32 engage the outer surfaces or edges 14b, as illustrated in the schematic diagram of Fig. 4. It will be readily understood that in this modified arrangement, the righthand front castor 4 will be restrained from swivelling in a clockwise direction when a force $f_1$ is applied to the front of the trolley tending to move it to the left, and the lefthand front castor 3 will be restrained from swivelling in the anticlockwise direction when a force $f_2$ is applied to the front of the trolley tending to move it to the right.

In the above-described embodiment in which the trolley is provided with two front castors, the described arrangement permitting each front castor to swivel in one direction even when the swivel stop pins 32 are down provides a significant operational advantage, as will now be explained.

When the trolley 1 is being manoeuvered rearwardly, for example when it has just been pulled backwards from the rear end of a line of nested trolleys, swivelling of the rear castors 5 and 6 alone does not provide an ideal steering action; in these circumstances steering would be improved by swivelling of the front castors 3 and 4 also. The described embodiments of Figs. 1 to 4 provide just such an advantage.

When the trolley is first pulled backwardly, the front castors 3 and 4 will both tend to swivel to place the point of contact of the wheel with the ground behind the swivel axis A relative to the direction of rearward travel of the trolley. In the castor arrangement of Fig. 3, the lefthand castor 3 will therefore rotate anticlockwise, and the right-hand castor 4 will rotate clockwise to the positions, relative to the stop pins 32, illustrated in Fig. 5, in which arrow R indicates the direction of rearward travel of the trolley. The castors 3 and 4 very quickly adopt these swivel positions illustrated in Fig. 5, permitting the trolley thereafter to be manoeuvered during further rearward travel. For example, if the trolley is pulled in such a way that the front of the trolley tends to move to the right as seen in plan, both of the front castors 3 and 4 will tend to swivel in a clockwise direction C to adopt a steering position, for example as illustrated in Fig. 6.

Accordingly, rearward steering is made easy, while it will be appreciated that as soon as the trolley is again pushed forwards, the front castors 3 and 4 will quickly swivel so as to return to the positions illustrated in Fig. 3. If the trolley is pushed forwards from a condition in which following rearward manoeuvering the front castors are oriented away from the in-line position, for example as shown in Fig. 6, one of the castors may come into engagement with the corresponding stop pin 32 before reaching the forward in-line position of Fig. 3. From the Fig. 6 condition, for example, the right-hand castor 4 will swivel clockwise into engagement with the righthand pin 32, and the swivel torque causes the castor 4 to apply to the pin a force which creates a lifting moment to pivot the member 27 upwardly about its horizontal hinge 28/29. The bottom of the pin 32 then rides over the top of the nose 14 of the castor 4 as the latter rotates further to the in-line position and finally drops down the side of the nose to adopt the relative position of Fig. 3.

The arrangement of figures 1 and 2 in which a common displaceable swivel control member 27 acts simultaneously on both of the front castors for selective swivel inhibition can be modified as shown in Fig. 7. In the modified arrangement, the swivelling of each front castor is controlled by a respective separate pivotable swivel control member 40.

Each said member 40 is pivoted to and projects rearwardly from a respective mounting bracket 41, and is made of heavy gauge wire or rod bent so as to form an inclined side arm 42 and a vertical stop pin 43. The side arms 42 and stop pins 43 of the members 40 perform the same functions as the side arms 27a and stop pins 32 of the embodiment of Figures 1 and 2. The only difference is that the members 40 are separately and independently raised when the trolley is nested.

Each mounting bracket 41 is fixed, e.g. by welding, to the respective swivel bearing casing 26 and/or to the lower frame member 11 of the chassis 2, and has upstanding side flanges 44 to which the corresponding member 40 is pivotably mounted.

It will be appreciated from the above description that the described embodiments include various novel features which can give rise independently to advantages. These are each independent aspects to be covered by the present invention. For example, the arrangement for the selective release of the inhibition of swivelling of the castor or castors is a feature which is applicable independently of the feature of partial freedom of the castor or castors to swivel. Conversely, it would be possible to obtain the combined advantage of forward enforced directionality and rearward freedom of swivel of the front castors without the provision of a release mechanism permitting free swivelling of the castors during forward travel of the trolley.

It should be noted that the selective inhibition of swivel may equally well be applied to the rear castors, in which case the front castors will always be free to swivel.

It should also be noted that the elements forming the swivel inhibiting assembly in the above-described arrangements have been designed to permit ready adaptation of existing trolley structures. The assemblies can easily be fitted and special castor constructions are not required.

## Claims

1. A steerable mobile load carrier having a set of ground-contacting wheel elements of which at least one is a swivel castor, means being provided for selectively and releasably inhibiting swivel of said at least one castor from a set position, said at least one castor, when so inhibited, maintaining a desired direction of travel of the carrier.

2. A carrier according to claim 1 which is adapted to be nested with other similar carriers, said inhibiting means being adapted to release said at least one swivel castor upon nesting of the carrier with another carrier and to re-inhibit said at least one swivel castor upon de-nesting.

3. A carrier according to claim 1 or claim 2 wherein said set of ground-contacting wheel elements includes first and second said swivel castors which are laterally spaced apart relative to a longitudinal axis and are mounted at corresponding longitudinal positions, and wherein said inhibiting means is adapted to prevent the swivelling of said swivel castors in respective ones of two opposite directions of swivel from corresponding predetermined positions, each said swivel castor being free to swivel in the other said direction.

4. A carrier according to any preceding claim wherein said set of ground-contacting wheel elements comprises a front pair of laterally spaced-apart swivel castors and a rear pair of laterally spaced-apart swivel castors, said at least one swivel castor comprising one of said pairs of castors.

5. A carrier according to claim 4 wherein each castor of said other pair of castors is maintained freely swivellable.

6. A carrier according to claim 4 or claim 5 wherein said inhibiting means comprises a common displaceable swivel control member which extends laterally between the castors of said one pair and which controls the swivelling of both of said castors.

7. A carrier according to claim 4 or claim 5 wherein said inhibiting means comprises respective independently displaceable swivel control members for controlling the swivelling of the respective castors of said one pair.

8. A carrier according to any preceding claim wherein any said set position the or each said at least one swivel castor has its horizontal axis of rotation substantially perpendicular to the longitudinal axis of the carrier.

9. A carrier according to claim 2 or any claim dependent thereon wherein said inhibiting means is adapted to be normally retained by gravity in its swivel-inhibiting state.

10. A carrier according to any preceding claim wherein said inhibiting means includes, in respect of each of said at least one swivel castor, a swivel stop member for inhibiting swivel of the castor by engaging a vertical face of the swivellable wheel support thereof at a position spaced from the vertical swivel axis thereof.

11. A steerable mobile load carrier having a set of ground-contacting wheel elements of which at least one is a swivel castor, means being provided for inhibiting swivel of said at least one castor from a set position in forward travel of the carrier, and for permitting swivel of said at least one castor from said set position in reverse travel of the carrier.

12. A carrier according to claim 11 wherein said set of ground-contacting wheel elements includes first and second said swivel castors which are laterally spaced apart relative to a longitudinal axis and are mounted at corresponding longitudinal positions, and wherein said inhibiting means is adapted to prevent the swivelling of said swivel castors in respective ones of two opposite directions of swivel from corresponding predetermined positions, each said swivel castor being free to swivel in the other said direction.

13. A carrier according to and preceding claim, in the form of a shopping trolley adapted to be pushed from the rear.

# FIG.1.

# FIG.2.

# FIG.7.

# FIG.3.

# FIG.4.

# FIG.5.

# FIG.6.